# EUROPEAN PATENT APPLICATION

(11) **EP 1 876 692 A1**
(43) Date of publication of application: **09.01.2008**
(21) Application number: 06732362.6
(22) Date of filing: 26.04.2006
(51) Int. Cl.: H02K 37/14, H02K 1/14

(54) **BRUSHLESS MOTOR**

(30) Priority: 28.04.2005 JP 2005131258
(71) Applicant: Valeo Thermal Systems Japan Corporation, Kohnan-machi Ohsato-gun Saitama 360-0193 (JP); Tonex Co., Ltd., Isesaki-shi Gunma 379-2221 (JP)
(72) Inventor: SEKINE, Akiyoshi, VALEO THERMAL SYSTEMS JAPAN CO., Ohsato-gun, Saitama 360-0193 (JP); MASAUJI, Mamoru, VALEO THERMAL SYSTEMS JAPAN CO., Ohsato-gun, Saitama 360-0193 (JP); YAMASHITA, Toshiya, VALEO THERMAL SYSTEMS JAPAN CO, Ohsato-gun, Saitama 360-0193 (JP)
(74) Representative: Gesthuysen, von Rohr & Eggert
(86) International application number: PCT/JP2006/308756
(87) International publication number: WO 2006/118150

(57) **Abstract**

To reduce the occurrence of vibration without any need for adding an electronic component, changing an existing layout space, and the like.

In each of magnetic pole teeth 42 of yokes 41a to 41d, a ratio of a length of a side 44c, which is a tip portion, to a width b of a root portion is 65% or more, and a ratio of its height h to the width b of the root portion is not less than 90% nor more than 110%, and its maximum width in a circumferential direction is set to a value within 30 degrees in terms of mechanical angle, and this enables a change in an amount of magnetic flux interlinked with a stator coil, so that a waveform of induced voltage of the stator coils 31a, 31b can be corrected to a form restraining the generation of a torque causing the occurrence of the vibration, and vibration level is by far lower than conventional vibration level.

## Description

### Technical Field

The present invention relates to a stepping motor, and more particularly, to a stepping motor realizing smaller vibration, improved quietness, and the like.

### Background Art

A stepping motor is used in various devices such as devices requiring positional control. For example, in an automobile air-conditioner, it is used as a drive motor controlling a door opening degree of various kinds of air-conditioning doors, and permanent magnet type stepping motors with claw poles (magnetic pole teeth) and the like are in wide use (see, for example, a patent document 1).

Because of its structure, such a stepping motor unavoidably vibrates due to a change in rotation torque when starting and stopping its rotation. In particular, in a stepping motor of an automobile air-conditioner and the like for which quietness is a great necessity, how to reduce the vibration is an important problem.

For example, as a relatively easy method to reduce such vibration, a signal having a gently rising and falling waveform, that is, a sinusoidal wave signal, is used as a driving signal of a stepping motor, which is generally a rectangular-wave pulse signal if there is no need to consider the reduction of the aforesaid vibration.

However, to obtain a driving signal having the aforesaid desired waveform, a circuit for shaping a waveform of the driving signal into the desired signal waveform needs to be added inside the stepping motor or in a driving signal generating circuit provided outside the stepping motor, and such an increase in the number of components leads to an increase in price of a device, and in addition, in a device such as an automobile air-conditioner for which compactness of its individual components is a great necessity, the method to add an electronic component in a stepping motor with a limited inner space is actually difficult to realize.
Patent document 1: Japanese Patent Application Laid-open No. Hei 5-308767

### Disclosure of the Invention

### Problems to be Solved by the Invention

The present invention was made in view of the above circumstances, and provides a stepping motor realizing reduced vibration without requiring any addition of an electronic component, any change in an existing layout space, or the like.

### Means for Solving the Problems

According to an embodiment of the present invention, there is provided a stepping motor including: a rotor formed by using a permanent magnet formed in a columnar shape; a yoke facing an outer peripheral surface of the rotor and having a plurality of magnetic pole teeth arranged in a circumferential direction; and a stator coil disposed near outer peripheries of the plural magnetic pole teeth, with a center axis of the stator coil being coaxial with a rotary shaft of the rotor, the stepping motor characterized in that
in each of the magnetic pole teeth of the yoke, a ratio of a width of a tip portion to a width of a root portion is 65% or more, and a ratio of a height of each of the magnetic pole teeth to the width of the root portion is not less than 90% nor more than 110%.

### Advantage of the Invention

According to the present invention, the magnetic pole teeth are formed to have a predetermined dimension, thereby enabling a change in an amount of magnetic flux interlinked with the stator coil, so that an induced voltage waveform of the stator coil can have a shape restraining the generation of a torque causing the occurrence of vibration, and therefore, unlike a conventional art, it is possible to provide a stepping motor whose vibration accompanying its rotation is surely reduced and whose quietness is extremely high, without adding any new electronic component to an electronic circuit or without reserving any space for the arrangement of a new component.

Further, it is possible to impart the same operation and effect as those of the present invention to an existing stepping motor, by changing the shape of magnetic pole teeth of its yoke to the shape of the magnetic pole teeth according to the present invention, and thus it is possible to realize a high degree of quietness at low cost.

Further, since no new component is added to a conventional configuration, the present invention is not contrary to the demand for a more compact stepping motor and can realize further compactness.

### Brief Description of Drawings

FIG. 1 is an exploded perspective view showing an example of the whole configuration of a stepping motor in an embodiment of the present invention;
FIG. 2 is an enlarged front view of a magnetic pole tooth of a yoke of the stepping motor shown in FIG. 1;
FIG. 3 is an enlarged front view of a magnetic pole tooth of a yoke in a second embodiment;
FIG. 4 is an enlarged front view of a magnetic pole tooth of a yoke in a third embodiment;
FIG. 5 is an enlarged front view of a magnetic pole tooth of a yoke in a fourth embodiment;
FIG. 6 is an enlarged front view of a magnetic pole tooth of a yoke in a fifth embodiment; and
FIG. 7 is a characteristic line graph showing an example of a vibration test of the stepping motor in the embodiment of the present invention.

### Explanation of Codes

- 1: Rotor
- 2: Stator
- 3: Housing
- 31a, 31b: Stator Coil
- 41a to 41d: Yoke
- 42: Magnetic Pole Teeth

### Description of Specific Embodiment

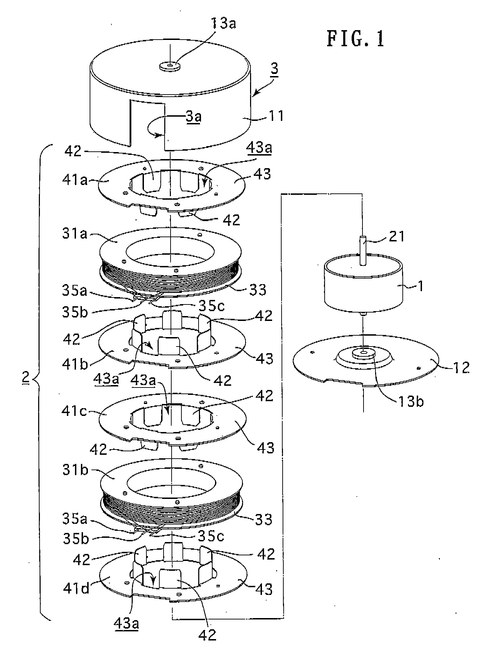

Hereinafter, embodiments of the present invention will be described with reference to FIG. 1 to FIG. 7.

It should be noted that members, arrangement, and so on described below are not intended to limit the present invention, and various modifications can be made without departing from the spirit of the present invention.

First, an example of the whole configuration of a stepping motor in an embodiment of the present invention will be described with reference to FIG. 1.

The stepping motor in the embodiment of the present invention is a permanent magnet type stepping motor with claw poles, and its basic configuration is the same as that of a conventionally known stepping motor of this type except in the shape of claw poles (magnetic pole teeth), which will be described in detail later.

Specifically, the stepping motor in the embodiment of the present invention is mainly divided into a rotor 1 rotatably housed in a housing 3, and a stator 2 assembled in the housing 3 so as to surround the rotor 1.

The housing 3 includes: a main body portion 11 formed in a bottomed hollow cylindrical shape; and a cover portion 12, and an opening portion of the main body portion 11 is positioned on a vertical-direction lower side (lower side of the drawing in FIG. 1) and in this state, the cover portion 12 is attached to the opening portion to cover the opening portion.

At a center of a top side of the main body portion 11, that is, the opposite side of the opening portion, a bearing 13a is provided, and a bearing 13b is also provided at a center portion of the cover portion 12, so that the bearings 13a, 13b support both end portions of a rotary shaft 21 of the rotor 1 which will be described next.

Incidentally, in the main body portion 11, a cutout 3a for connection is formed to allow external connection terminals 35a to 35c of later-described stator coils 31a, 31b to protrude outward therefrom.

The rotor 1 is formed by using a permanent magnet alternately magnetized to N and S in a circumferential direction according to the number of poles of the stator 2, and its whole shape is substantially columnar, and the rotary shaft 21 is attached to the rotor 1 so as to match a center axis of the rotor 1. Incidentally, in this example, its outer peripheral surface is covered by a resin member, with aims such as protecting a pole face of the permanent magnet.

The stator 2 has: the pair of stator coils 31a, 31b formed in an annular shape; and yokes 41a, 41b, 41c, 41d attached to the stator coils 31a, 31b from above and from under.

Each of the stator coils 31a, 31b is structured such that a wire is wound around a bobbin 33 in an annular shape made of a nonmagnetic material. In each of the stator coils 31a, 31b in this embodiment, the external connection terminals 31a to 35c each made of a conductive member are provided on a peripheral edge portion of one end portion of the bobbin 33 so as to protrude outward, and an end portion of a coil winding is connected to the external connection terminals 31a to 35c, so that a driving signal can be applied from an external part via the external connection terminals 35a to 35c.

The yokes 41a to 41d, whose dimension and shape will be described in detail later, all basically have the same shape and structure, and the yokes 41a, 41b are attached to the stator coil 31a so as to sandwich the stator coil 31a from above and from under and so that magnetic pole teeth 42 are fitted along an inner circumferential surface of a hollow portion of the stator coil 31a. The yokes 41c, 41d are similarly attached to the other stator coil 31b.

Each of the yokes 41a to 41d in the embodiment of the present invention has the six magnetic pole teeth 42. The set of the upper and lower yokes 41a, 41b, when attached to the stator coil 31a, are set to such a positional relation that the magnetic pole teeth 42 of the yoke 41b are positioned between the magnetic pole teeth 42 of the yoke 41a. This also applies to the yokes 41c, 41d.

The stator coils 31a, 31b to which the yokes 41a, 41b, 41c, 41d are attached as described above are housed in the housing 3 in a vertically stacked state in such a manner that the rotor 1 is positioned in hollow portions of the stator coils 31a, 31b, and the rotary shaft 21 of the rotor 1 and center axes of the stator coils 31a, 31b are in a coaxial positional relation.

Incidentally, when the rotor 1 and the stator coils 31a, 31b are housed in the housing 3, they are positioned so that the external connection terminals 35a to 35c of the stator coils 31a, 31b protrude outward from the cutout 3a for connection, and a not-shown connection connector is attached to the portion of the cutout 3a for connection to enable electrical connection between the external connection terminals 35a to 35c and an external circuit (not shown).

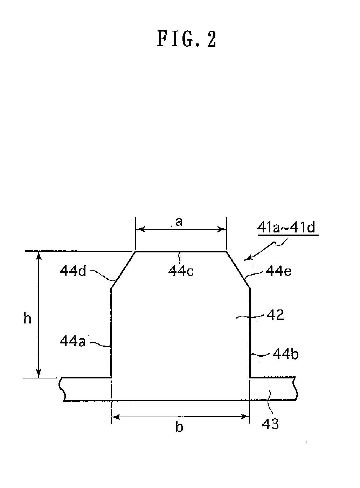

Next, the yokes 41a to 41d in the embodiment of the present invention will be described in detail with reference to FIG. 2.

The yokes 41a to 41d in the embodiment of the present invention have a structure such that each is formed by using a flat-plate magnetic member to have a substantially annular whole shape, and on its inner circumferential edge, the plural magnetic pole teeth 42, in this embodiment, for example, six magnetic pole teeth 42 are arranged at equal intervals in a circumferential direction, and the basic structure of the yokes 41a to 41d is the same as that of a conventional one of this type, except in that the magnetic pole teeth 42 have the following dimension and shape.

Specifically, each of the yokes 41a to 41d in the embodiment of the present invention has a base 43 formed in an annular shape, and on a peripheral edge portion of a through hole 43a formed in a center portion of the base 43, the six magnetic pole teeth 42 are arranged at equal intervals in the circumferential direction so as to extend in the center direction of the through hole 43a, and also are cut up so as to make a substantially right angle relative to the base portion 43. The yokes 41a to 41d thus structured are suitably manufactured by, for example, press punching.

Each of the magnetic pole teeth 42 has the dimension and shape specified as follows by a tip width a which is a width of its tip portion, a root width b which is a width of its root portion, and a height h from the base portion 43.

First, a ratio r1 of the tip width a to the root width b is expressed, in terms of percentage, as r1 = (a/b) x 100 = 65% or more, and in addition, it is necessary that, in the assembled state, the magnetic pole teeth 42 of the other yoke can be positioned between the adjacent magnetic pole teeth 42 as previously described. It is preconditioned that the number of poles of the stepping motor of the embodiment of the present invention is 24, and since the number of the magnetic pole teeth of each of the yokes 41a to 41d is 6, it is necessary that the maximum width of one magnetic pole tooth 42 in the circumferential direction of the through hole 43a is within 30 degrees in terms of mechanical angle.

Further, a ratio r2 of the height h to the root width b is set, in terms of percentage, to r2 = (h/b) x 100 = not less than 90% nor more than 110%.

FIG. 2 is a front view of the magnetic pole tooth 42, and the shape of the magnetic pole tooth 42 shown in this front view is formed by sides 44a, 44b extending from the root of the magnetic pole tooth 42 at a right angle to the base 43, a side 44c, which is a tip portion, parallel to the root of the magnetic pole tooth 42, and sides 44d, 44e which are straight lines connecting both end portions of the side 44c and end portions of the sides 44a, 44b.

The shape of each of the magnetic pole teeth 42 is not limited to the shape shown in FIG. 2, but may of course be any other shape satisfying the aforesaid conditions, that is, the ratio r1 of the tip width a to the root width b, the mechanical angle width in the circumferential direction of the through hole 43a, and the ratio r2 of the height h to the root width b.

The present applicant found out that the vibration accompanying the operation of the stepping motor is prominent near a positive peak of a rotation toque at the start of the rotation and near a negative peak of the rotation torque at the stoppage of the rotation, and that the occurrence of the peaks depends on induced voltage of the stator coils 41a to 41d and the magnitude of coil current, and as a result of studious studies based on these findings, the above-described shape of the magnetic pole teeth 42 in the embodiment of the present invention was obtained. That is, from the above viewpoint, the present applicant reached the conclusion that a magnetic field increasing a peak of the induced voltage of the stator coils 41a to 41d and reducing a change thereof near zero-cross is effective to reduce the vibration occurring due to the peaks of the torque, and after repeating various tests, the applicant was able to derive the above-described shape of the magnetic pole teeth.

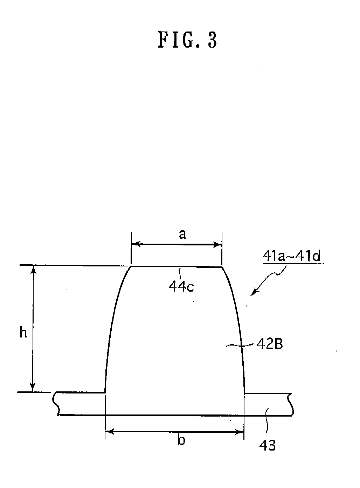

FIG. 3 to FIG. 6 show other embodiments of the magnetic pole teeth, and hereinafter, the examples shown in these drawings will be described. It goes without saying that all of the examples described below satisfy the above-described conditions, that is, the ratio r1 of the tip width a to the root width b, the mechanical angle width in the circumferential direction of the through hole 43a, and the ratio r2 of the height h to the root width b, and detailed description thereof will not be repeated again. Further, the same reference numerals and symbols are used to designate the same elements as the elements in the structure examples shown in FIG. 1 and FIG. 2, and detailed description thereof will be omitted and the description below will be mainly focused on what are different.

First, a magnetic pole tooth 42B in a second embodiment shown in FIG. 3 will be described. In the magnetic pole tooth 42B in this example, a side along a tip portion is a straight line similarly to that of the magnetic pole tooth 42 previously shown in FIG. 2, but this magnetic pole tooth 42B is different from the magnetic pole tooth 42 in FIG. 2 previously described in that sides between both end portions of the side 44c and the root are curves (for example, arcs or the like).

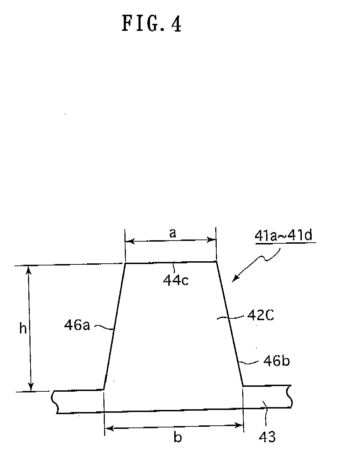

Next, a magnetic pole tooth 42C in a third embodiment shown in FIG. 4 will be described. In the magnetic pole tooth 42C in this example, a side along a tip portion is a straight line similarly to that of the magnetic pole tooth 42 previously shown in FIG. 2, but sides 46a, 46b between both end portions of the side 44c of this tip portion and the root are straight lines.

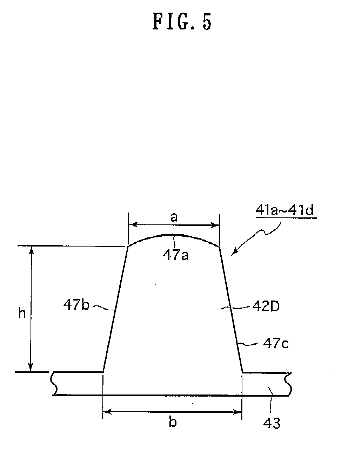

Next, a magnetic pole tooth 42D in a fourth embodiment shown in FIG. 5 will be described. In the magnetic pole tooth 42D in this example, a side 47a along a tip portion is a curve (for example, an arc or the like) unlike that of the magnetic pole tooth 42 previously shown in FIG. 2, and sides 47b, 47c between both end portions of the side 47a and the root are straight lines.

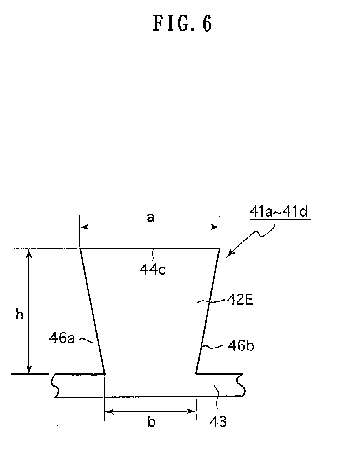

Next, a magnetic pole tooth 42E in a fifth embodiment shown in FIG. 6 will be described. In the magnetic pole tooth 42E in this example, a side 44c along a tip portion is a straight line and sides 46a, 46b between both end portions of the side 44c and the root are also straight lines similarly to those of the magnetic pole tooth 42C previously shown in FIG. 4, but the magnetic pole tooth 42E is different from the magnetic pole tooth 42C in that the root width b is set smaller than the tip width a.

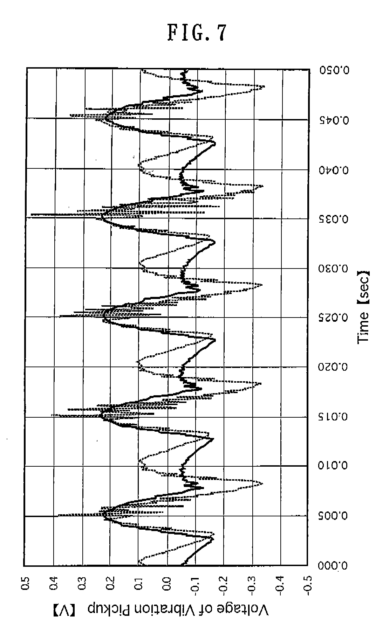

Next, an example of a test on vibration level generated by the stepping motor in the embodiment of the present invention will be described with reference to FIG. 7.

First, FIG. 7 shows vibration level detected by a vibration detection sensor (not shown) attached at an appropriate position of an outer peripheral surface of the housing 3 of the stepping motor, and in FIG. 7, time (second) is taken on the horizontal axis and vibration level (V) is taken on the vertical axis. Further, in this drawing, the solid line is a characteristic line representing a change characteristic of the vibration level of the stepping motor in the embodiment of the present invention, and the dotted line is a characteristic line representing a change characteristic of vibration level of a conventional stepping motor.

From the comparison of the vibration level of the stepping motor in the embodiment of the present invention at peak points of the vibration level which appear periodically in the conventional stepping motor, it can be confirmed that in the stepping motor of the embodiment, vibration level is improved by slightly more than about 0.1 V at the minimum, and by slightly less than about 0.3 V at the maximum. That is, by adopting the yokes 41a to 41d having the above-described shape, the stepping motor in the embodiment of the present invention has surely reduced vibration level compared with that of the conventional stepping motor.

### Industrial Availability

By forming the magnetic pole teeth in a predetermined shape, it is possible to correct an induced voltage waveform in the stator coil causing vibration accompanying the rotation, thereby restraining the occurrence of the vibration, and therefore, the present invention is applicable to usage such as driving a blower of a vehicle air-conditioner of which quietness is required.

## Claims

1. A stepping motor comprising: a rotor formed by using a permanent magnet formed in a columnar shape; a yoke facing an outer peripheral surface of the rotor and having a plurality of magnetic pole teeth arranged in a circumferential direction; and a stator coil disposed near outer peripheries of the plural magnetic pole teeth, with a center axis of the stator coil being coaxial with a rotary shaft of the rotor, the stepping motor
**characterized in that**
in each of the magnetic pole teeth of the yoke, a ratio of a width of a tip portion to a width of a root portion is 65% or more, and a ratio of a height of each of the magnetic pole teeth to the width of the root portion is not less than 90% nor more than 110%.

2. The stepping motor according to claim 1, **characterized in that** the number of poles of the stepping motor is 24, and a circumferential width of each of the magnetic pole teeth is within 30 degrees in terms of mechanical angle.
